# EUROPEAN PATENT SPECIFICATION

(11) **EP 2 860 047 B1**
(45) Date of publication and mention of the grant of the patent: **15.06.2016**
(21) Application number: 14187854.6
(22) Date of filing: 07.10.2014
(51) Int. Cl.: B60C 1/00, C08L 9/00

(54) **Rubbery blend containing trans isoprene-butadiene copolymer**
Gummiartige Mischung mit Trans-Isopren-Butadien-Copolymeren
Mélange caoutchouteux contenant un copolymère de trans isoprène-butadiène

(30) Priority: 08.10.2013 US 201314048598
(43) Date of publication of application: 15.04.2015
(73) Proprietor: The Goodyear Tire & Rubber Company, Akron, Ohio 44316 (US)
(72) Inventor: Sandstrom, Paul Harry, Cuyahoga Falls, OH Ohio 44223 (US); Yang, Xiaoping, Streetsboro, OH Ohio 44241 (US); Hua, Kuo-Chih, Richfield, OH Ohio 44286 (US); Golden, James Joseph, North Canton, OH Ohio 44720 (US); Beha, Daniel Ray, Akron, OH Ohio 44313 (US)
(74) Representative: Kutsch, Bernd

(56) References cited:
- EP-A1- 1 512 553
- EP-A1- 1 593 528

## Description

### Field of the Invention

The strength of unvulcanized rubber is commonly referred to as "green strength". It is the tensile strength or tensile modulus of an uncured rubber formulation. It is normally quantified in terms of the stress-strain characteristics of the pure rubber or the rubber formulation of interest. Green strength can also be thought of in terms of stress elongation, tensile strength, and creep. ASTM D6746 provides a test method for quantifying green strength. A standard test for measuring green strength is also delineated in the International Standard ISO 9026. In any case, having adequate green strength is critical in the processing of rubber and rubber formulations into useful products. Green strength is the property of a rubbery polymer which allows for it to be built into multiple component articles with little or no release or relative movement of the assembled components subsequent to assembly and prior to initiation of the curing operation.

A high level of green strength is normally desirable to attain good rubber processing behavior. It is a particularly important characteristic for all processing operations in which elongation predominates. For instance, adequate green strength is required for a rubber formulation to perform well in extrusions, calendaring, and tire building operations. In other words, it is important for rubber compounds to have sufficient green strength to be built into rubber composites, such as tires. It is particularly important for the rubber and rubber compounds used in building large tires to have a high level of green strength in order for the rubber layers of the tire to adhere together during the tire building process. It is particularly important in the second stage of building radial tires and in building large tires for trucks, industrial equipment, and earthmovers. In cases where green tires are built with rubber compounds that exhibit poor green strength the tire may fail to hold air during expansion in the second stage of the tire building process prior to cure.

Natural rubber inherently exhibits a relatively high level of green strength. For this reason it is commonly used in building large tires for trucks, industrial equipment, mining equipment, and earthmovers. However, in some applications it would be desirable to further increase the green strength of the natural rubber to more easily facilitate the tire building process. Over the years numerous approaches for increasing the green strength of rubber formulations have been considered. Nevertheless, increasing the green strength of natural rubber in commercial application has proven to be a formidable task.

US-A- 4,094,831 indicates that the green strength of synthetic elastomers can be improved by forming interpolymers from at least one type of various synthetic elastomer forming monomers with an epoxy containing monomer. It indicates that green strength can be further improved if a small amount of an epoxy cross-linking agent is utilized. Examples of suitable cross-linking agents include monoamines and polyamines, monoanhydrides and polyanhydrides, and monocarboxylic acids, as well as polycarboxylic acids.

US-A- 4,103,077 and US-A- 4,124,750 disclose techniques for improving the green strength of synthetic elastomers by cross-linking them with a dihydrazide compound.

US-A- 4,124,546 discloses that the improved green strength of elastomers made from monomers selected from the class consisting of at least one conjugated diene having from 4 to 10 carbon atoms, olefins having from 2 to 14 carbon atoms along with a diene having from 4 to 6 carbon atoms, and combinations thereof can be achieved by adding an amount of a polydimethylbutadiene compound to form a blend having a glass transition temperature of from 0°C to -100°C.

US-A- 4,198,324 and US-A- 4,243,561 reveal that the green strength of elastomers can be improved by the addition of semi-crystalline butene polymers, such as polybutene and interpolymers made from 1-butene monomer and at least one monomer selected from the class consisting of α-olefins, non-conjugated dienes, and non-conjugated polyenes.

US-A- 4,254,013 indicates that the green strength of elastomer blends of natural or synthetic cis-1,4-polyisoprene and synthetic elastomers can be improved by adding to the chain of the synthetic elastomer an ionogenic compound.

### Summary of the Invention

The invention relates to a rubber composition in accordance with claim 1 and to a tire in accordance with claim 14.

Dependent claims refer to preferred embodiments of the invention.

The subject invention is based upon the discovery that certain trans-1,4-isoprene-butadiene copolymers can be incorporated into natural rubber or synthetic elastomers to improve the green strength thereof. The trans-1,4-isoprene-butadiene copolymers utilized in the practice of this invention contain 4 weight percent to 16 weight percent 1,3-butadiene repeat units and from 84 weight percent to 96 weight percent isoprene repeat units. The trans-1,4-isoprene-butadiene copolymer employed in the practice of this invention also typically has a Mooney ML 1+4 viscosity which is within the range of 35 to 80 and typically has a melting point which is within the range of 30°C to 65°C.

The present invention more specifically relates to a rubber composition which comprises (1) 2 phr to about to 45 phr of a trans-1,4-isoprene-butadiene copolymer which has 4 weight percent to 16 weight percent 1,3-butadiene repeat units and from 84 weight percent to 96 weight percent isoprene repeat units, wherein the trans-1,4-isoprene-butadiene copolymer has a Mooney ML 1+4 viscosity which is within the range of 35 to 80; and (2) 55 phr to 98 phr of at least one other elastomer.

The subject invention also reveals a tire which comprises a generally toroidal-shaped carcass, a circumferential belt, overlay, with an outer circumferential tread, two spaced beads, at least one ply extending from bead to bead, chafer, apex, innerliner and sidewalls extending radially from and connecting said tread to said beads, wherein at least one of these tire components such as the tread or the sidewalls contains a rubber blend which comprises (1) 2 phr to 45 phr of a trans-1,4-isoprene-butadiene copolymer which has 4 weight percent to 16 weight percent 1,3-butadiene repeat units and from 84 weight percent to 96 weight percent isoprene repeat units, wherein the trans-1,4-isoprene-butadiene copolymer has a Mooney ML 1+4 viscosity which is within the range of 35 to 80; and (2) 55 phr to 98 phr of at least one other elastomer. The preferred components for this rubber blend are the belt, ply and overlay compounds which contain various types of reinforcing continuous cords. The tire may be a pneumatic tire or a non-pneumatic tire.

### Detailed Description of Example Embodiments of the Invention

The rubber composition of this invention are made by blending from 2 phr (parts per 100 parts by weight of rubber) to 45 phr of a trans-1,4-isoprene-butadiene copolymer with 55 phr to 98 phr of at least one other elastomer, with the preferred elastomer being diene based and consisting of a synthetic or a natural high cis-1,4-polyisoprene. It is important for the trans-1,4-isoprene-butadiene copolymer to contain from 4 weight percent to 16 weight percent 1,3-butadiene repeat units and from 84 weight percent to 96 weight percent isoprene repeat units. It is also important for the trans-1,4-isoprene-butadiene copolymer to have a Mooney ML 1+4 viscosity which is within the range of 35 to 80.

The trans-1,4-isoprene-butadiene copolymer utilized in the practice of this invention will more typically contain from 6 weight percent to 14 weight percent 1,3-butadiene repeat units and from 86 weight percent to 94 weight percent isoprene repeat units. The trans-1,4-isoprene-butadiene copolymer will preferably contain from 8 weight percent to 12 weight percent 1,3-butadiene repeat units and from 88 weight percent to 92 weight percent isoprene repeat units. In most cases the trans1,4-isoprene-butadiene copolymer will have a Mooney ML 1+4 viscosity which is within the range of 40 to 75 and will typically have a Mooney ML 1+4 viscosity which is within the range of 45 to 70. The trans-1,4-isoprene-butadiene copolymer will preferably have a Mooney ML 1+4 viscosity which is within the range of 50 to 60. The trans-1,4-isoprene-butadiene copolymer utilized in the practice of this invention can also be characterized in that it has a melting point which is within the range of 30°C to 65°C.

The trans-1,4-isoprene-butadiene copolymer can be incorporated into a wide variety of rubbery polymers to improve the green strength thereof. For example, the trans-1,4-isoprene-butadiene copolymer can be used to improve the green strength of virtually any rubber or elastomer containing olefinic unsaturation. The phrases "rubber or elastomer containing olefinic unsaturation" or "diene based elastomer" are intended to include both natural rubber and its various raw and reclaim forms, as well as various synthetic rubbers. In this description, the terms "rubber" and "elastomer" may be used interchangeably, unless otherwise indicated. The terms "rubber composition", "compounded rubber", "rubber compound" and "rubber formulation" are used interchangeably to refer to rubber which has been blended or mixed with various ingredients and materials and such terms are well known to those having skill in the rubber mixing or rubber compounding art.

Some representative examples of synthetic polymers into which the trans-1,4-isoprene-butadiene copolymer can be incorporated to improve the green strength thereof include the homopolymerization products of butadiene and its homologues and derivatives, such as methylbutadiene, dimethylbutadiene, and pentadiene, as well as copolymers, such as those formed from butadiene or its homologues or derivatives with other unsaturated monomers. Among the latter may be acetylenes (i.e., vinyl acetylene), olefins (i.e., isobutylene, which copolymerizes with isoprene to form butyl rubber), vinyl compounds (i.e., acrylic acid or acrylonitrile, which polymerize with butadiene to form NBR), methacrylic acid, and styrene (which polymerizes with butadiene to form SBR), as well as vinyl esters and various unsaturated aldehydes, ketones and ethers, e.g., acrolein, methyl isopropenyl ketone, and vinylethyl ether.

Specific examples of synthetic rubbers that can be used in making the rubber compositions of this invention include neoprene (polychloroprene), polybutadiene (including cis-1,4-polybutadiene), polyisoprene (including cis-1,4-polyisoprene), butyl rubber, halobutyl rubber (such as chlorobutyl rubber or bromobutyl rubber), styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. The technique of this invention is typically of greatest benefit in improving the green strength of natural rubber, synthetic polyisoprene homopolymer rubber, polybutadiene rubber, styrene-butadiene rubber, isoprene-butadiene rubber, styrene-isoprene rubber, and styrene-isoprene-butadiene rubber. These polymers can be star-branched polymers which are coupled with a silicon halide or a tin halide, such as silicon tetrachloride or tin tetrachloride.

The rubber compositions of this invention are made by simply mixing the trans-1,4-isoprene-butadiene copolymer into the other elastomer using any conventional means that can be employed to attain a relatively homogeneous blend. For instance, the trans-1,4-isoprene-butadiene copolymer can be mixed into the other elastomer on a mill mixer or in a Banbury mixer using known mixing techniques.

The rubber compositions of this invention can also contain conventional reinforcing fillers, such as carbon black or silica. Carbon blacks are typically used as a filler in an amount ranging from 10 phr to 150 phr. The carbon black can have iodine absorptions ranging from 9 to 145 g/kg and DBP number ranging from 34 to 150 cm3/100 g. Other fillers may be used in the rubber composition including, but not limited to, particulate fillers including ultra-high molecular weight polyethylene (UHMWPE), crosslinked particulate polymer gels, and plasticized starch composite filler. Such other fillers may be used in an amount ranging from 1 to 30 phr.

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils.

The rubber composition may further include from 10 to 150 phr of silica. Siliceous pigments which may be used in the rubber compound include conventional pyrogenic and precipitated siliceous pigments (silica). Such conventional silicas might be characterized, for example, by having a BET surface area, as measured using nitrogen gas. The BET surface area may be in the range of 40 to 600 square meters per gram. The conventional silica may also be characterized by having a dibutylphthalate (DBP) absorption value in a range of 100 to 400, alternatively 150 to 300.

It may readily be understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. Representative antioxidants may be, for example, diphenyl-p-phenylenediamine and others. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. In many cases microcrystalline waxes are used. Typical amounts of peptizers comprise 0.1 to 1 phr. Typical peptizers may be, for example, pentachlorothiophenol and dibenzamidodiphenyl disulfide.

Accelerators may be used to control the time and/or temperature required for vulcanization and to improve the properties of the vulcanizate. A single accelerator system may be used, i.e., primary accelerator. The primary accelerator(s) may be used in total amounts ranging from 0.5 to 4 phr. Combinations of a primary and a secondary accelerator may be used with the secondary accelerator being used in smaller amounts, such as from 0.05 to 3 phr, in order to activate and to improve the properties of the vulcanizate.

In addition, delayed action accelerators may be used which are not affected by normal processing temperatures, but produce a satisfactory cure at ordinary vulcanization temperatures. Vulcanization retarders might also be used. Suitable types of accelerators that may be used are amines, disulfides, guanidines, thioureas, thiazoles, thiurams, sulfenamides, dithiocarbamates and xanthates.

The rubber formulation of this invention including the trans-1,4-isoprenebutadiene copolymer can be mixed utilizing a thermomechanical mixing technique. For example, the ingredients are typically mixed in at least two stages; namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) of the preceding non-productive mix stage(s). The rubber, silica and sulfur containing organosilicon, and carbon black, if used, are mixed in one or more non-productive mix stages. The sulfur-vulcanizable rubber composition containing the sulfur containing organosilicon compound, vulcanizable rubber and generally at least part of the silica should be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be for a duration of time which is within the range of 2 minutes to 20 minutes. It will normally be preferred for the rubber to reach a temperature which is within the range of 145°C to 180°C and to be maintained at said temperature for a period of time which is within the range of 3 minutes to 12 minutes.

The example pneumatic tire for use with the present invention may be a race tire, passenger tire, runflat tire, aircraft tire, agricultural, earthmover, off-the-road, medium truck tire, or any pneumatic or non-pneumatic tire. In one example, the tire is a passenger or truck tire. The tire may also be a radial ply tire or a bias ply tire.

After the tire has been built with the rubber formulation of this invention, it can be vulcanized using a normal tire cure cycle. Tires made in accordance with this invention can be cured over a wide temperature range. However, it is generally preferred for the tires of this invention to be cured at a temperature ranging from 132°C to 166°C. It is more typical for the tires of this invention to be cured at a temperature ranging from 143°C to 154°C. Any of the usual vulcanization processes may be used such as heating in a press or mold and/or heating with superheated steam or hot air.

This invention is illustrated by the following examples that are merely for the purpose of illustration and are not to be regarded as limiting the scope of the invention or the manner in which it can be practiced. Unless specifically indicated otherwise, parts and percentages are given by weight.

### Comparative Example 1 and Examples 2-4

In this series of experiments rubber formulations were prepared by mixing trans-1,4-isoprene-butadiene copolymers with natural rubber. A control which did not include any trans-1,4-isoprene-butadiene copolymer was also prepared and evaluated for comparative purposes. Non-productive rubber compounds were made by mixing the following ingredients into a natural rubber control (Example 1) or blends that contained 90 phr of the natural rubber and 10 phr of various trans-1,4-isoprene-butadiene copolymers:

| | |
|---|---|
| carbon black | 50 phr |
| zinc oxide | 3 phr |
| fatty acid | 1 phr |
| antidegradent | 1 phr |
| processing oil | 4 phr |

The uncured rubber formulations where subsequently tested to determine the physical properties of the blends. The rubber formulations were subsequently compounded with 1.6 phr of sulfur, 1.2 phr of an accelerator, and 0.1 phr of a retarder to make productive formulations which were later cured and tested for physical properties. The physical properties of the cured and uncured rubber formulations are reported in Table 1.

| **Table 1** | | | | |
|---|---|---|---|---|
| | Example 1 | Example 2 | Example 3 | Example 4 |
| Natural rubber | 100 phr | 90 phr | 90 phr | 90 phr |
| TIBR | - | 10 phr | 10 phr | 10 phr |
| Bd in TIBR | N/A | 11.0% | 8.9% | 10.7% |
| TIBR Mooney | N/A | 29 | 37 | 55 |
| **Green Strength** | | | | |
| Stress @ | | | | |
| 40% Strain | 0.35 | 0.59 | 0.63 | 0.63 |
| 80% Strain | 0.41 | 0.66 | 0.72 | 0.74 |
| 120% Strain | 0.43 | 0.72 | 0.83 | 0.88 |
| 240% Strain | 0.49 | 0.89 | 1.14 | 1.27 |
| 480% Strain | 0.91 | 1.42 | 1.76 | 1.90 |
| **RPA** | | | | |
| Uncured G' | 246 | 231 | 249 | 260 |
| G' @ 10% | 1652 | 1713 | 1684 | 1690 |
| TD @ 10% | 0.099 | 0.10 | 0.10 | 0.099 |
| **Rheometer** | | | | |
| Delta T | 17.3 | 18.4 | 17.8 | 17.7 |
| T90 | 13.4 | 13.2 | 12.6 | 12.5 |
| **Stress/Strain** | | | | |
| Tensile Strength | 25.5 | 23.9 | 24.0 | 24.1 |
| Elong @ break | 455 % | 426% | 442% | 446% |
| 300% Modulus | 17.3 | 17.5 | 16.7 | 16.6 |
| **Hysteresis** | | | | |
| Rebound, 100°C | 67 | 67 | 67 | 67 |
| **Abrasion** | | | | |
| Grosch, Med S | 107 | 104 | 103 | 102 |

As can be seen from Table 1, substantial improvements in green strength were realized by incorporating trans-1,4-isoprene-butadiene copolymer (TIBR) into the natural rubber. The best improvement in green strength was attained with the trans-1,4-isoprene-butadiene copolymer utilized in Example 4 which had a Mooney viscosity of 55. Accordingly, it is preferred for the trans-1,4-isoprene-butadiene copolymer employed in the rubber compositions of this invention to have a Mooney ML 1 +4 viscosity which is above 37 and preferably above 50 (typically within the range of 50 to 60). The other measured properties were not significantly affected by the addition of the TIBR's.

### Comparative Examples 5-6

In this series of experiments rubber formulations were prepared by mixing trans-1,4-isoprene-butadiene copolymer with natural rubber utilizing the same procedure and formulations which were employed in Comparative Example 1 and Examples 2-4. However the level of bound butadiene in the isoprene-butadiene copolymer was increased in Comparative Example 5 and Comparative Example 6 to 15.7% and 19.0%, respectively, with the Mooney ML 1+4 viscosity of the isoprene-butadiene copolymer being held at about 55. The uncured rubber formulations where subsequently tested to determine the physical properties of the blends and the rubber formulations were subsequently compounded, cured, and tested for physical properties utilizing the curatives and procedure used in Comparative Example 1 and Examples 2-4. The physical properties of the cured and uncured rubber formulations are reported in Table 2 which also includes the results attained for Comparative Example 1 and Example 4.

| **Table 2** | | | | |
|---|---|---|---|---|
| | Example 1 | Example 4 | Example 5 | Example 6 |
| Natural rubber | 100 phr | 90 phr | 90 phr | 90 phr |
| TIBR | - | 10 phr | 10 phr | 10 phr |
| Bd in TIBR | N/A | 10.7% | 15.7% | 19.0% |
| TIBR Mooney | N/A | 55 | 56 | 57 |
| **Green Strength** | | | | |
| Stress @ | | | | |
| 40% Strain | 0.35 | 0.63 | 0.57 | 0.52 |
| 80% Strain | 0.41 | 0.74 | 0.65 | 0.58 |
| 120% Strain | 0.43 | 0.88 | 0.72 | 0.62 |
| 240% Strain | 0.49 | 1.27 | 0.94 | 0.79 |
| 480% Strain | 0.91 | 1.90 | 1.58 | 1.37 |
| **RPA** | | | | |
| Uncured G' | 246 | 260 | 262 | 270 |
| G' @ 10% | 1652 | 1690 | 1706 | 1746 |
| TD @ 10% | 0.099 | 0.099 | 0.097 | 0.098 |
| **Rheometer** | | | | |
| Delta T | 17.3 | 17.7 | 17.8 | 18.3 |
| T90 | 13.4 | 12.5 | 13.8 | 15.0 |
| **Stress/Strain** | | | | |
| Tensile Strength | 25.5 | 24.1 | 24.4 | 23.7 |
| Elong @ break | 455 % | 446% | 442% | 423% |
| 300% Modulus | 17.3 | 16.6 | 17.1 | 17.5 |
| **Hysteresis** | | | | |
| Rebound, 100°C | 67 | 67 | 68 | 67 |
| **Abrasion** | | | | |
| Grosch, Med S | 107 | 102 | 104 | 96 |

As can be seen from Table 1, the best improvement in green strength was attained with the trans-1,4-isoprene-butadiene copolymer which contained 10.7% bound butadiene. In fact, as the level of bound butadiene in the 1,4-isoprene-butadiene copolymer is increased above a level of 10% the green strength of the compounded rubber formulations was negatively impacted. Accordingly, it is preferred for the trans-1,4-isoprene-butadiene copolymer employed in the rubber compositions of this invention to contain from 5 weight percent to 20 weight percent 1,3-butadiene repeat units and from 88 weight percent to 95 weight percent isoprene repeat units, with the most preferred level of 1,3-butadiene repeat units being in a range of 5 to 15 weight percent.

## Claims

1. A rubber composition comprising 2 phr to 45 phr of a trans-1,4-isoprene-butadiene copolymer which has from 4 weight percent to 16 weight percent 1,3-butadiene repeat units and from 84 weight percent to 96 weight percent isoprene repeat units, wherein the trans-1,4-isoprene-butadiene copolymer has a Mooney ML 1+4 viscosity within the range of from 35 to 80, and 55 phr to 98 phr of at least one other elastomer.

2. The rubber composition as specified in claim 1 wherein the other elastomer comprises repeat units which are derived from isoprene.

3. The rubber composition as specified in claim 1 or 2 wherein the other elastomer comprises repeat units which are derived from 1,3-butadene.

4. The rubber composition as specified in at least one of the previous claims wherein the other elastomer is selected from the group consisting of natural rubber, synthetic polyisoprene homopolymer rubber, polybutadiene rubber, styrene-butadiene rubber, isoprene-butadiene rubber, styrene-isoprene rubber, and styrene-isoprene-butadiene rubber.

5. The rubber composition as specified in at least one of the previous claims wherein the a trans-1,4-isoprene-butadiene copolymer contains 5 weight percent to 20 weight percent 1,3-butadiene repeat units and from 80 weight percent to 95 weight percent isoprene repeat units,

6. The rubber composition in at least one of the previous claims such as claim 1 or 5 wherein the trans-1,4-isoprene-butadiene copolymer has a Mooney ML 1+4 viscosity which is within the range of from 40 to 75.

7. The rubber composition as specified in at least one of the previous claims such as claim 1 or 6 wherein the rubber composition contains from 3 phr to 30 phr of the trans-1,4-isoprene-butadiene copolymer and from 70 phr to 97 phr of the other elastomer.

8. The rubber composition as specified in at least one of the previous claims such as claim 1 or 7 wherein the a trans-1,4-isoprene-butadiene copolymer has a melting point which is within the range of from 30°C to 65°C.

9. The rubber composition as specified in claim 1 or 5 wherein the trans-1,4-isoprene-butadiene copolymer contains 5 weight percent to 10 weight percent 1,3-butadiene repeat units and from 90 weight percent to 95 weight percent isoprene repeat units.

10. The rubber composition as specified in at least one of the previous claims such as claim 1 or 9 wherein the trans-1,4-isoprene-butadiene copolymer has a Mooney ML 1+4 viscosity which is within the range of from 45 to 70.

11. The rubber composition as specified in at least one of the previous claims wherein the rubber composition contains from 5 phr to 20 phr of the trans-1,4-isoprene-butadiene copolymer and from 80 phr to 95 phr of the other elastomer.

12. The rubber composition as specified in at least one of the previous claims wherein the trans-1,4-isoprene-butadiene copolymer has a Mooney ML 1+4 viscosity which is within the range of from 55 to 65.

13. The rubber composition as specified in at least one of the previous claims wherein the rubbery composition further comprises a reinforcing filler such as carbon black and/or silica.

14. A tire having a generally toroidal-shaped carcass with an outer circumferential tread, two spaced beads, at least one ply extending from bead to bead and sidewalls extending radially from and connecting said tread to said beads, wherein said circumferential tread is adapted to be ground-contacting, and wherein the circumferential tread and/or the sidewalls comprise the rubber composition as specified in at least one of the previous claims.

## Patentansprüche

1. Kautschukzusammensetzung, umfassend 2 phr bis 45 phr eines trans-1,4-Isopren-Butadien-Copolymers, das 4 Gewichtsprozent bis 16 Gewichtsprozent 1,3-Butadien-Repetiereinheiten und 84 Gewichtsprozent bis 96 Gewichtsprozent Isopren-Repetiereinheiten aufweist, wobei das trans-1,4-Isopren-Butadien-Copolymer eine Mooney ML 1+4-Viskosität im Bereich von 35 bis 80 aufweist, und 55 phr bis 98 phr mindestens eines anderen Elastomers.

2. Kautschukzusammensetzung, wie in Anspruch 1 spezifiziert, wobei das andere Elastomer Repetiereinheiten umfasst, die von Isopren abgeleitet sind.

3. Kautschukzusammensetzung, wie in Anspruch 1 oder 2 spezifiziert, wobei das andere Elastomer Repetiereinheiten umfasst, die von 1,3-Butadien abgeleitet sind.

4. Kautschukzusammensetzung, wie in mindestens einem der vorhergehenden Ansprüche spezifiziert, wobei das andere Elastomer aus der Gruppe ausgewählt ist, bestehend aus Naturkautschuk, synthetischem Polyisopren-Homopolymerkautschuk, Polybutadienkautschuk, Styrol-Butadien-Kautschuk, Isopren-Butadien-Kautschuk, Styrol-Isopren-Kautschuk und Styrol-Isopren-Butadien-Kautschuk.

5. Kautschukzusammensetzung, wie in mindestens einem der vorhergehenden Ansprüche spezifiziert, wobei das trans-1,4-Isopren-Butadien-Copolymer 5 Gewichtsprozent bis 20 Gewichtsprozent 1,3-Butadien-Repetiereinheiten und 80 Gewichtsprozent bis 95 Gewichtsprozent Isopren-Repetiereinheiten enthält.

6. Kautschukzusammensetzung in mindestens einem der vorhergehenden Ansprüche, wie etwa Anspruch 1 oder 5, wobei das trans-1,4-Isopren-Butadien-Copolymer eine Mooney ML 1+4-Viskosität aufweist, die im Bereich von 40 bis 75 liegt.

7. Kautschukzusammensetzung, wie in mindestens einem der vorhergehenden Ansprüche, wie etwa Anspruch 1 oder 6, spezifiziert, wobei die Kautschukzusammensetzung 3 phr bis 30 phr des trans-1,4-Isopren-Butadien-Copolymers und 70 phr bis 97 phr des anderen Elastomers enthält.

8. Kautschukzusammensetzung, wie in mindestens einem der vorhergehenden Ansprüche, wie etwa Anspruch 1 oder 7, spezifiziert, wobei das trans-1,4-Isopren-Butadien-Copolymer einen Schmelzpunkt aufweist, der im Bereich von 30°C bis 65°C liegt.

9. Kautschukzusammensetzung, wie in Anspruch 1 oder 5 spezifiziert, wobei das trans-1,4-Isopren-Butadien-Copolymer 5 Gewichtsprozent bis 10 Gewichtsprozent 1,3-Butadien-Repetiereinheiten und 90 Gewichtsprozent bis 95 Gewichtsprozent Isopren-Repetiereinheiten enthält.

10. Kautschukzusammensetzung, wie in mindestens einem der vorhergehenden Ansprüche, wie etwa Anspruch 1 oder 9, spezifiziert, wobei das trans-1,4-Isopren-Butadien-Copolymer eine Mooney ML 1+4-Viskosität aufweist, die im Bereich von 40 bis 70 liegt.

11. Kautschukzusammensetzung, wie in mindestens einem der vorhergehenden Ansprüche spezifiziert, wobei die Kautschukzusammensetzung 5 phr bis 20 phr des trans-1,4-Isopren-Butadien-Copolymers und 80 phr bis 95 phr des anderen Elastomers enthält.

12. Kautschukzusammensetzung, wie in mindestens einem der vorhergehenden Ansprüche spezifiziert, wobei das trans-1,4-Isopren-Butadien-Copolymer eine Mooney ML 1+4-Viskosität aufweist, die im Bereich von 55 bis 65 liegt.

13. Kautschukzusammensetzung, wie in mindestens einem der vorhergehenden Ansprüche spezifiziert, wobei die gummiartige Zusammensetzung weiter einen Verstärkungsfüllstoff, wie etwa Carbon Black und/oder Silika, umfasst.

14. Reifen mit einer im Allgemeinen toroidförmigen Karkasse mit einer äußeren umfangsgerichteten Lauffläche, zwei beabstandeten Wülsten, mindestens einer sich von Wulst zu Wulst erstreckenden Karkassenlage, und Seitenwänden, die sich radial von besagter Lauffläche erstrecken und diese mit den Wülsten verbinden, wobei die umfangsgerichtete Lauffläche zum Inkontaktkommen mit dem Boden eingerichtet ist und wobei die umfangsgerichtete Lauffläche und/oder die Seitenwände die Kautschukzusammensetzung, wie in mindestens einem der vorhergehenden Ansprüche spezifiziert, umfassen.

## Revendications

1. Composition de caoutchouc comprenant, à concurrence de 2 phr à 45 phr, un copolymère de trans 1,4 isoprène-butadiène qui possède, à concurrence de 4 % en poids à 16 % en poids, des motifs de répétition du 1,3-butadiène et, à concurrence de 84 % en poids à 96 % en poids, des motifs de répétition d'isoprène, le copolymère de trans 1,4 isoprène-butadiène possédant une viscosité de Mooney ML 1+4 qui se situe dans la plage de 35 à 80, et à concurrence de 55 phr à 98 phr, au moins un autre élastomère.

2. Composition de caoutchouc telle que spécifiée dans la revendication 1, dans laquelle l'autre élastomère comprend des motifs de répétition qui dérivent de l'isoprène.

3. Composition de caoutchouc telle que spécifiée dans la revendication 1 ou 2, dans laquelle l'autre élastomère comprend des motifs de répétition qui dérivent du 1,3-butadiène.

4. Composition de caoutchouc telle que spécifiée dans au moins une des revendications précédentes, dans laquelle l'autre élastomère est choisi parmi le groupe constitué par du caoutchouc naturel, un caoutchouc d'homopolymère de polyisoprène synthétique, un caoutchouc de polybutadiène, un caoutchouc de styrène-butadiène, un caoutchouc d'isoprène-butadiène, un caoutchouc de styrène-isoprène et un caoutchouc de styrène-isoprène-butadiène.

5. Composition de caoutchouc telle que spécifiée dans au moins une des revendications précédentes, dans laquelle le copolymère de trans 1,4 isoprène-butadiène contient, à concurrence de 5 % en poids à 20 % en poids, des motifs de répétition du 1,3-butadiène et, à concurrence de 80 % en poids à 95 % en poids, des motifs de répétition d'isoprène.

6. Composition de caoutchouc telle que spécifiée dans au moins une des revendications précédentes telle que la revendication 1 ou 5, dans laquelle le copolymère de trans 1,4 isoprène-butadiène possède une viscosité de Mooney ML 1+4 qui se situe dans la plage de 40 à 75.

7. Composition de caoutchouc telle que spécifiée dans au moins une des revendications précédentes telle que la revendication 1 ou 6, dans laquelle la composition de caoutchouc contient, à concurrence de 3 phr à 30 phr, un copolymère de trans 1,4 isoprène-butadiène et, à concurrence de 70 phr à 97 phr, l'autre élastomère.

8. Composition de caoutchouc telle que spécifiée dans au moins une des revendications précédentes telle que la revendication 1 ou 7, dans laquelle le copolymère de trans 1,4 isoprène-butadiène possède un point de fusion qui se situe dans la plage de 30 °C à 65 °C.

9. Composition de caoutchouc telle que spécifiée dans la revendication 1 ou 5, dans laquelle le copolymère de trans 1,4 isoprène-butadiène contient, à concurrence de 5 % en poids à 10 % en poids, des motifs de répétition du 1,3-butadiène et, à concurrence de 90 % en poids à 95 % en poids, des motifs de répétition d'isoprène.

10. Composition de caoutchouc telle que spécifiée dans au moins une des revendications précédentes telle que la revendication 1 ou 9, dans laquelle le copolymère de trans 1,4 isoprène-butadiène possède une viscosité de Mooney ML 1+4 qui se situe dans la plage de 45 à 70.

11. Composition de caoutchouc telle que spécifiée dans au moins une des revendications précédentes, dans laquelle la composition de caoutchouc contient, à concurrence de 5 phr à 20 phr, le copolymère de trans 1,4 isoprène-butadiène et, à concurrence de 80 phr à 95 phr, l'autre élastomère.

12. Composition de caoutchouc telle que spécifiée dans au moins une des revendications précédentes, dans laquelle le copolymère de trans 1,4 isoprène-butadiène possède une viscosité de Mooney ML 1+4 qui se situe dans la plage de 55 à 65.

13. Composition de caoutchouc telle que spécifiée dans au moins une des revendications précédentes, dans laquelle la composition caoutchouteuse comprend une matière de charge pour le renforcement, telle que du noir de carbone et/ou de la silice.

14. Bandage pneumatique possédant une carcasse de configuration généralement toroïdale comprenant une bande de roulement circonférentielle externe, deux talons espacés, au moins une nappe qui s'étend d'un talon à l'autre, et des flancs qui s'étendent en direction radiale à partir de ladite bande de roulement et qui relient celle-ci auxdits talons, dans lequel ladite bande de roulement circonférentielle est conçue pour entrer en contact avec le sol, et dans lequel la bande de roulement circonférentielle et/ou les flancs comprend/comprennent la composition de caoutchouc telle que spécifiée dans au moins une des revendications précédentes.
